(19) Europäisches Patentamt
European Patent Office
Office européen des brevets

(11) **EP 3 073 171 A1**

(12) **EUROPEAN PATENT APPLICATION**
published in accordance with Art. 153(4) EPC

(43) Date of publication:
**28.09.2016 Bulletin 2016/39**

(21) Application number: **14863720.0**

(22) Date of filing: **04.11.2014**

(51) Int Cl.:
**F16L 59/00** *(2006.01)*   **B32B 5/18** *(2006.01)*
**C04B 38/00** *(2006.01)*   **F02F 1/00** *(2006.01)*
**F02F 1/24** *(2006.01)*   **F02F 1/42** *(2006.01)*

(86) International application number:
**PCT/JP2014/079262**

(87) International publication number:
**WO 2015/076098 (28.05.2015 Gazette 2015/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.11.2013 JP 2013239274**

(71) Applicant: **NGK Insulators, Ltd.**
**Nagoya-shi, Aichi 467-8530 (JP)**

(72) Inventors:
• **KOBAYASHI, Hiroharu**
**Nagoya-shi**
**Aichi 467-8530 (JP)**

• **TOMITA, Takahiro**
**Nagoya-shi**
**Aichi 467-8530 (JP)**
• **ORIBE, Akinobu**
**Nagoya-shi**
**Aichi 467-8530 (JP)**

(74) Representative: **Teipel, Stephan et al**
**Lederer & Keller**
**Patentanwälte Partnerschaft mbB**
**Unsöldstrasse 2**
**80538 München (DE)**

(54) **HEAT-INSULATION FILM, AND HEAT-INSULATION-FILM STRUCTURE**

(57)   There are provided a heat-insulation film in which a heat insulation effect improves, and a heat-insulation-film structure. In a heat-insulation film 3, porous plate fillers 1 are dispersed in a matrix 3m to bond the porous plate fillers 1. The porous plate filler 1 includes plates having an aspect ratio of 3 or more, a minimum length of 0.1 to 50 $\mu$m and a porosity of 20 to 90%. In the heat-insulation film 3, a volume ratio between the porous plate fillers and the matrix is from 50:50 to 95:5. In the heat-insulation film 3 in which the porous plate fillers 1 are used, a length of a heat transfer path increases and a thermal conductivity can be decreased, as compared with a case where spherical or cubic fillers are used.

FIG.3B

**Description**

Technical Field

The present invention relates to a heat-insulation film in which a heat insulation effect improves, and a heat-insulation-film structure.

Background Art

There is required a heat-insulation film which is formed on a surface to improve a heat insulation efficiency and flame retardance. In Patent Document 1, a coating film is disclosed which has a high surface hardness and can prevent the surface from being damaged. The coating film is formed by dispersing hollow particles made of silica shells in a binder. By a wear resistance and high hardness of the hollow particles made of the silica shells, the wear resistance of a substrate on which the coating film is formed can improve. Additionally, the flame retardance can improve due to heat insulation properties of the hollow particles made of the silica shells.

In Patent Document 2, there is disclosed an internal combustion engine including a structural member in which a heat insulation performance improves. In the internal combustion engine of Patent Document 2, a heat-insulation material is disposed adjacent to an inner wall of an exhaust passage, and a high-temperature operative gas (an exhaust gas) flows along through channels made of the heat-insulation material. In the heat-insulation material, MSS (mesoporous silica sphere) particles having an average particle diameter of 0.1 to 3 $\mu$m are laminated in a state where the respective particles are densely bonded to one another via a bonding material. In the MSS particles, an infinite number of mesopores having an average pore diameter of 1 to 10 nm are formed.

Citation List

Patent Documents

[Patent Document 1] JP-A-2008-200922
[Patent Document 2] JP-A-2011-52630

Summary of the Invention

Problem to be Solved by the Invention

In Patent Document 1, hollow particles made of silica shells having outer diameters of about 30 to 300 nm are substantially uniformly dispersed in an organic resin binder, an inorganic polymer binder or an organic/inorganic composite binder, and hence heat insulation properties of a coating film can be obtained. Additionally, in Patent Document 2, there are densely laminated MSS (mesoporous silica sphere) particles having mesopores in which an average particle diameter is from 0.1 to 3 $\mu$m and an average pore diameter is from 1 to 10 nm, and hence a heat insulation performance is high.

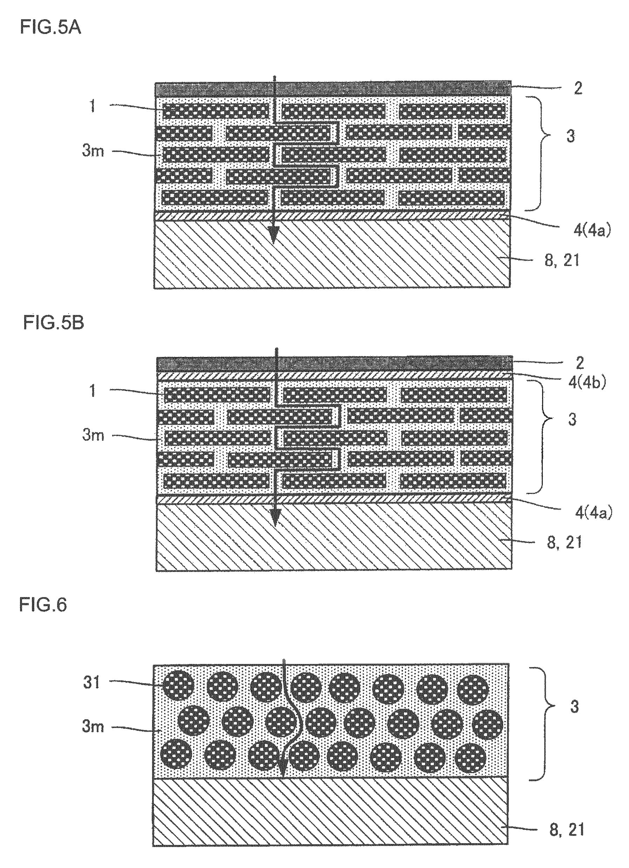

The hollow particles or porous particles for use in Patent Document 1 or 2 have a low thermal conductivity, and hence it is presumed that a matrix portion except the particles (a phase which bonds the particles to each other) becomes a main heat transfer path. These particles are cubic or spherical, and hence a path of heat comparatively shortens as shown in Fig. 6, and the thermal conductivity does not sufficiently decrease.

Objects of the present invention are to provide a heat-insulation film in which a heat insulation effect improves, and to provide a heat-insulation-film structure.

Means for Solving the Problem

The present inventors have found that the above problems can be solved by providing a heat-insulation film in which porous plate fillers are dispersed in a matrix to bond the porous plate fillers and a volume ratio between the porous plate fillers and the matrix is in a predetermined range. That is, according to the present invention, there are provided a heat-insulation film and a heat-insulation-film structure as follows.

[1] A heat-insulation film in which porous plate fillers including plates having an aspect ratio of 3 or more, a minimum length of 0.1 to 50 $\mu$m and a porosity of 20 to 90% are dispersed in a matrix to bond the porous plate fillers, and a volume ratio between the porous plate fillers and the matrix is from 50:50 to 95:5.

[2] The heat-insulation film according to the above [1], wherein when a line is drawn from a first surface to a second surface on an opposite side to the first surface in a thickness direction in a cross section parallel to the thickness direction, a ratio between a sum of lengths of line segments present on the porous plate fillers and a sum of lengths of line segments present on the matrix is from 50:50 to 95:5.

[3] The heat-insulation film according to the above [1] or [2], wherein a thermal conductivity of the porous plate filler is 1 W/(m·K) or less.

[4] The heat-insulation film according to any one of the above [1] to [3], wherein a heat capacity of the porous plate filler is from 10 to 3000 kJ/($m^3$·K).

[5] The heat-insulation film according to any one of the above [1] to [4], wherein the porous plate filler includes pores of a nanoorder.

[6] The heat-insulation film according to any one of the above [1] to [5], wherein the porous plate filler includes a metal oxide.

[7] The heat-insulation film according to any one of the above [1] to [6], wherein the porous plate filler includes particles having particle diameters of 1 nm to 10 $\mu$m.

[8] The heat-insulation film according to any one of the above [1] to [7], wherein a heat capacity is 1500 kJ/($m^3$·K) or less.

[9] The heat-insulation film according to any one of the above [1] to [8], wherein a thermal conductivity is 1.5 W/(m·K) or less.

[10] A heat-insulation-film structure in which the heat-insulation film according to any one of the above [1] to [9] is formed on a substrate.

[11] The heat-insulation-film structure according to the above [10], which has, on the surface of the heat-insulation film, a surface dense layer including ceramics and/or glass and having a porosity of 5% or less.

[12] The heat-insulation-film structure according to the above [11], which includes a buffer bonding layer having a thickness smaller than the heat-insulation film, between the substrate and the heat-insulation film and/or between the heat-insulation film and the surface dense layer.

Effect of the Invention

In a heat-insulation film which includes porous plate fillers including plates having an aspect ratio of 3 or more, a minimum length of 0.1 to 50 $\mu$m and a porosity of 20 to 90% and in which a volume ratio between the porous plate fillers and the matrix is from 50:50 to 95:5, a length of a heat transfer path increases and a thermal conductivity can be decreased as compared with a case where spherical or cubic fillers are used. Consequently, even a thin heat-insulation film has a heat insulation effect higher than before. Additionally, a bonding area between the porous plate fillers via the matrix is larger as compared with a case where the spherical fillers or the like are used, and hence a strength can increase. Furthermore, the porous plate fillers are the plates, and hence concavity and convexity are hard to be formed on the outermost surface of the heat-insulation film, and particle drop of the porous plate fillers, i.e., deficiency of the heat-insulation film can be prevented.

Brief Description of the Drawings

Fig. 1 is a schematic view showing one embodiment of a porous plate filler;
Fig. 2 is a schematic view showing another embodiment of the porous plate filler;
Fig. 3A is a schematic view showing one embodiment of a heat-insulation film and a heat-insulation-film structure of the present invention;
Fig. 3B is a schematic view to explain directing of a ratio by a line;
Fig. 4 is a schematic view showing one embodiment of an engine;
Fig. 5A is a schematic view showing another embodiment of the heat-insulation film and the heat-insulation-film structure of the present invention;
Fig. 5B is a schematic view showing still another embodiment of the heat-insulation film and the heat-insulation-film structure of the present invention; and
Fig. 6 is a schematic view showing a heat-insulation film and a heat-insulation-film structure of a comparative example.

Mode for Carrying out the Invention

Hereinafter, embodiments of the present invention will be described with reference to the drawings. The present invention is not limited to the following embodiments, and change, modification and improvement can be added without departing from the gist of the present invention.

1. Porous Plate Filler

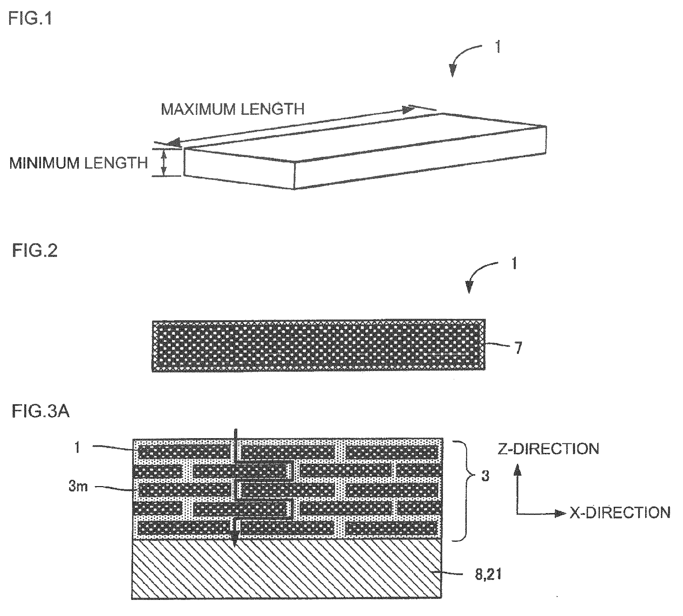

Fig. 1 shows one embodiment of a porous plate filler 1. The porous plate filler 1 is a plate having an aspect ratio of 3 or more, its minimum length is from 0.1 to 50 μm, and a porosity is from 20 to 90%. The porosity is more preferably from 40 to 85% and further preferably from 50 to 80%. A thermal conductivity of the porous plate filler 1 can be decreased by setting the porosity to 20% or more, and a strength thereof can be acquired by setting the porosity to 90% or less. In the present description, the porosity is obtained by the following equation.

$$\text{Porosity (\%)} = (1-(\text{apparent particle density/true density})) \times 100$$

In the above equation, the apparent particle density is measured by a liquid immersion method in which mercury is used. Additionally, the true density is measured by pycnometry after sufficiently grinding the porous plate filler.
Additionally, in the present description, the aspect ratio is defined by a maximum length/a minimum length of the porous plate filler 1. Here, the maximum length is a length maximized when particles (the porous plate filler 1) are sandwiched between a pair of parallel surfaces. Additionally, the minimum length is a length minimized when the particles are similarly sandwiched between the pair of parallel surfaces, and corresponds to a so-called thickness in a case where the filler is a flat plate. The porous plate filler 1 which is the plate includes not only a flat plate (the plate which is flat and is not bent) but also a bent flat plate and a plate having a thickness (the minimum length) which is not constant, as long as the aspect ratio is 3 or more and the minimum length is from 0.1 to 50 μm. Additionally, the filler may have a shape such as a fibrous shape, a needle shape or a billet shape. Among these shapes, the porous plate filler 1 is preferably the flat plate. Additionally, a surface shape of the plate may be any shape such as a square, a quadrangular shape, a triangular shape, a hexagonal shape or a round shape. That is, the porous plate filler 1 may have any shape as long as the filler is the flat plate.
It is preferable that the aspect ratio of the porous plate filler 1 is 3 or more. The larger the aspect ratio is, the longer a heat transfer path becomes and the lower the thermal conductivity of the heat-insulation film 3 becomes, because the heat transfer path is deflected when the heat-insulation film 3 is formed. However, when the aspect ratio is excessively large, it becomes difficult to handle the filler during manufacturing, and yield might be deteriorated. For example, when the minimum length is decreased to increase the aspect ratio, the strength might not sufficiently be obtained. On the other hand, when the maximum length is increased, the porous plate filler 1 might become large and be damaged. Consequently, the aspect ratio is more preferably 3 or more and 50 or less, further preferably 3.5 or more and 40 or less, and most preferably 4 or more and 30 or less.
When the porous plate filler 1 is included in the heat-insulation film 3 as described later, a heat insulation effect can improve.
It is preferable that the porous plate filler 1 includes pores of a nanoorder. Here, the nanoorder indicates a size of 1 nm or more and less than 1000 nm. When the pores of such a range are included, the heat insulation effect can improve.
It is preferable that the porous plate filler 1 includes pores having pore diameters of 10 to 500 nm. One filler may have one pore (a hollow particle) or a large number of pores (porous particles). The hollow particle is a particle in which one closed pore is present. The porous particles are particles having porous inner portions, i.e., the particles including the pores except the hollow particles. The porous plate filler 1 includes not only the porous particles but also the hollow particles. That is, the number of the pores to be included in the porous plate filler 1 may be one or large, and the pore may be the closed pore or an open pore. When the porous plate filler 1 having such pores is included in the heat-insulation film 3, the heat insulation effect can improve due to the pores.
Examples of a material of the porous plate filler 1 include hollow plate-shaped glass and hollow plate-shaped ceramic. Additionally, the examples of the material include mesoporous silica, mesoporous titania, mesoporous zirconia, and Shirasu balloons. Alternatively, an example of the filler is also a porous plate filler obtained by an after-mentioned manufacturing method.
It is preferable that the porous plate filler 1 includes a metal oxide, and it is further preferable that the porous plate filler is constituted only of the metal oxide. This is because, when the metal oxide is included, ion bonding properties between a metal and oxygen are strong and hence the thermal conductivity is easy to decrease as compared with a non-oxide (e.g., a carbide or a nitride) of the metal.
In the porous plate filler 1, it is preferable that the metal oxide is an oxide of one selected from the group consisting of elements such as Zr, Y, Al, Si, Ti, Nb, Sr, La, Hf, Ce, Gd, Sm, Mn, Yb, Er and Ta or a complex oxide of two or more selected from the group. When the metal oxide is the oxide or the complex oxide of these elements, heat conduction is hard to be caused by lattice vibration (phonons) which is a main factor of the heat conduction. An example of the material of the porous plate filler 1 is specifically a material obtained by adding $Gd_2O_3$, $Yb_2O_3$, $Er_2O_3$ or the like to $ZrO_2$-$Y_2O_3$. Further specifically, the examples of the material include $ZrO_2$-$HfO_2$-$Y_2O_3$, $ZrO_2$-$Y_2O_3$-$La_2O_3$, $ZrO_2$-$HfO_2$-$Y_2O_3$-$La_2O_3$, $HfO_2$-$Y_2O_3$, $CeO_2$-$Y_2O_3$, $Gd_2Zr_2O_7$, $Sm_2Zr_2O_7$, $LaMnAll_{11}O_{19}$, $YTa_3O_9$, $Y_{0.7}La_{0.3}Ta_3O_9$, $Y_{1.08}Ta_{2.76}Zr_{0.24}O_9$, $Y_2Ti_2O_7$, and $LaTa_3O_9$.

The porous plate filler 1 may be an inorganic material, an organic material, or a composite material of the inorganic material and the organic material. Above all, it is preferable that the material is an inorganic material such as zirconia, partially stabilized zirconia (e.g., yttria partially stabilized zirconia), completely stabilized zirconia (e.g., yttria completely stabilized zirconia), yttrium oxide, alumina, silica, titania, niobium oxide, strontium oxide, lanthanum oxide, zirconium, yttria, aluminum, silicon, titanium, niobium, strontium, lanthanum, rare earth zirconate (e.g., lanthanum zirconate), rare earth silicate (e.g., yttrium silicate), niobate (e.g., strontium niobate), mullite, mica, spinel, zircon, magnesia, ceria, silicon carbide, silicon nitride, aluminum nitride or strontium carbonate. The material is more preferably a metal oxide such as zirconia, partially stabilized zirconia (e.g., yttria partially stabilized zirconia), completely stabilized zirconia (e.g., yttria completely stabilized zirconia), yttrium oxide, alumina, silica, titania, niobium oxide, strontium oxide or lanthanum oxide. One of them may be used alone, or any combination of two or more of them may be used.

It is preferable that the porous plate filler 1 includes particles having particle diameters of 1 nm to 10 $\mu$m. The particle may be a particle constituted of one crystal grain (a single crystalline particle) or a particle constituted of a large number of crystal grains (a polycrystalline particle). That is, it is preferable that the porous plate filler 1 is an assembly of particles having particle diameters of this range. For the particle diameter, a size of one particle of a particle group constituting a framework of the porous plate filler 1 (in the case of a spherical particle, the size is a diameter, and in another case, the size is a maximum diameter) is measured from an image of electron microscope observation. The particle diameter is more preferably from 1 nm to 5 $\mu$m and further preferably from 50 nm to 1 $\mu$m. When the porous plate filler 1 having the particle diameters of such a range is included in the heat-insulation film 3, the heat insulation effect can improve.

The minimum length of the porous plate filler 1 is from 0.1 to 50 $\mu$m, more preferably from 0.5 to 20 $\mu$m, further preferably from 2 to 15 $\mu$m, and most preferably from 2 to 10 $\mu$m. When the minimum length of the porous plate filler 1 is shorter than 0.1 $\mu$m, it might be difficult to keep the shape of the porous plate filler 1 in manufacturing steps. In a case where the minimum length of the porous plate filler 1 is longer than 50 $\mu$m, there decreases the number of layers in the porous plate filler 1 when included in the heat-insulation film 3, so that the heat transfer path becomes close to a straight line and accordingly shortens, and the thermal conductivity of the heat-insulation film 3 might be high. Additionally, when the minimum length of the porous plate filler 1 is short, the heat-insulation film 3 can be thinned. That is, even in the thin heat-insulation film 3, the heat insulation effect can improve.

The thermal conductivity of the porous plate filler 1 is preferably 1 W/(m·K) or less. The thermal conductivity is more preferably 0.7 W/(m·K) or less, further preferably 0.5 W/(m·K) or less, and most preferably 0.3 W/(m·K) or less. When the porous plate filler 1 having such a thermal conductivity is included in the heat-insulation film 3, the heat insulation effect can improve.

A heat capacity of the porous plate filler 1 is preferably from 10 to 3000 $kJ/(m^3 \cdot K)$. The heat capacity is more preferably from 10 to 2500 $kJ/(m^3 \cdot K)$, further preferably from 300 to 2000 $kJ/(m^3 \cdot K)$, and most preferably from 400 to 1500 $kJ/(m^3 \cdot K)$. When the porous plate filler 1 having the heat capacity of such a range is included in the heat-insulation film 3, the heat insulation effect can improve. It is to be noted that in the present description, the heat capacity is generally argued per unit volume called volumetric specific heat, and hence a unit is $kJ/m^3 \cdot K$.

It is preferable that, as shown in Fig. 2, the porous plate filler 1 has a coating layer 7 having a thickness of 1 nm to 1 $\mu$m in at least a part of its surface. Furthermore, the coating layer 7 is preferably a thermal resistance film in which heat conduction is inhibited and/or radiant heat is reflected and/or the lattice vibration (the phonons) is scattered. When the thermal resistance film having a thickness of several tens nm is formed on the surface of the porous plate filler 1, the thermal conductivity of the heat-insulation film 3 can preferably further be decreased. The thermal resistance film may be any film as long as a material thereof is not the same as in the porous plate filler to be coated, and the porous plate filler 1 is preferably coated with a dissimilar material (e.g., alumina or zinc oxide). Even when the thermal resistance film is dense or porous, there is not any problem, but it is preferable that the film is dense. When the thermal resistance film is formed in a part of the surface of the porous plate filler 1, an effect of decreasing the thermal conductivity can be obtained, but when the whole surface of the porous plate filler 1 is coated with the thermal resistance film, the effect of decreasing the thermal conductivity can further be obtained.

Next, a manufacturing method of the porous plate filler 1 will be described. Examples of the manufacturing method of the porous plate filler 1 include press molding, casting, extrusion, injection molding, tape forming, and a doctor blade method. Any method may be used, but hereinafter, the doctor blade method will be described as an example.

First, a pore former, a binder, a plasticizer, a solvent and the like are added to ceramics powder to be mixed by a ball mill or the like, thereby preparing a green sheet forming slurry.

As the ceramics powder, there may be used zirconia powder, partially stabilized zirconia powder (e.g., yttria partially stabilized zirconia powder), completely stabilized zirconia powder (e.g., yttria completely stabilized zirconia powder), alumina powder, silica powder, titania powder, lanthanum oxide powder, yttria powder, rare earth zirconate powder (e.g., lanthanum zirconate powder), rare earth silicate powder (e.g., yttrium silicate powder), niobate powder (e.g., strontium niobate powder), mullite powder, spinel powder, zircon particles, magnesia powder, yttria powder, ceria powder, silicon carbide powder, silicon nitride powder, aluminum nitride powder or the like. One of them may be used, or any combination of two or more of them may be used. Additionally, the powder is not limited to dried powder, and the powder may be used in a colloidal state (a sol state) in which the powder is dispersed in water or an organic liquid medium. As the pore former, there may be used latex particles, melamine resin particles, PMMA particles, polyethylene particles, polystyrene particles, carbon black particles, foamable resin, water absorbable resin or the like. As the binder, there is usable polyvinyl butyral resin (PVB), polyvinyl alcohol resin, polyvinyl acetate resin, polyacrylic resin or the like. As the plasticizer, DBP (dibutyl phthalate), DOP (dioctyl phthalate) or the like is usable. As the solvent, xylene, 1-butanol or the like is usable.

The above green sheet forming slurry is subjected to a vacuum defoaming treatment, thereby adjusting a viscosity into 100 to 10000 cps. Afterward, a green sheet is formed by a doctor blade device so that a thickness of the green sheet after fired is from 0.1 to 100 $\mu$m, and an outer shape of the green sheet is cut into a dimension of (0.5 to 200) mm $\times$ (0.5 to 200) mm. A cut formed body is fired at 800 to 2300°C for 0.5 to 20 hours and this fired body is suitably ground, whereby a porous thin plate-shaped filler (the porous plate filler 1) can be obtained. It is to be noted that the green sheet before fired may be processed into a predetermined surface shape (a square, a quadrangular shape, a hexagonal shape or a round shape) or the like by cutting or punching, and then fired, whereby the porous thin plate-shaped filler can be obtained without performing grinding after the firing.

2. Coating Composition

A coating composition includes the porous plate filler 1 mentioned above, and one or more selected from the group consisting of an inorganic binder, an inorganic polymer, an organic/inorganic hybrid material, oxide sol and water glass. Furthermore, the coating composition may include a dense filler, a viscosity modifier, a liquid medium, a dispersing agent and the like. The heat-insulation film 3 can be formed by applying the coating composition and performing drying and/or a heat treatment. Specific substances to be included in the coating composition are cement, bentonite, aluminum phosphate, silica sol, alumina sol, boehmite sol, zirconia sol, titania sol, tetramethyl orthosilicate, tetraethyl orthosilicate, polysilazane, polycarbosilane, polyvinyl silane, polymethyl silane, polysiloxane, polysilsesquioxane, silicone, geopolymer, sodium silicate and the like. Additionally, in the case of the organic/inorganic hybrid material, there are desirable an acryl-silica based hybrid material, an epoxy-silica based hybrid material, a phenol-silica based hybrid material, a polycarbonate-silica based hybrid material, a nylon-silica based hybrid material, a nylon-clay based hybrid material, an acryl-alumina based hybrid material, an acryl-calcium silicate hydrate based hybrid material and the like.

A viscosity of the coating composition is preferably from 0.1 to 5000 mPa·s and further preferably from 0.5 to 1000 mPa·s. When the viscosity is smaller than 0.1 mPa·s, the coating composition flows after applied, and a thickness of the coating film might be non-uniform. When the viscosity is larger than 5000 mPa·s, the coating composition does not have any fluidity and might not uniformly be applied.

The heat-insulation film 3 in which the porous plate fillers 1 are uniformly dispersed in a matrix 3m can be obtained by adjusting the viscosity. For example, when the viscosity is excessively high, the porous plate fillers 1 are hard to be uniformly dispersed, and a portion where there are less porous plate fillers 1 is easily generated in the heat-insulation film 3. Dispersing properties of the porous plate fillers 1 in the coating composition (the slurry) can be increased by adding the dispersing agent, thereby making it possible to form the heat-insulation film 3 which is homogeneous. That is, by increasing the dispersing properties of the porous plate fillers 1, the homogeneous heat-insulation film 3 can be obtained and the thermal conductivity can be decreased.

3. Heat-Insulation Film

The heat-insulation film 3 will be described with reference to Fig. 3A. In the heat-insulation film 3 of the present invention, the porous plate fillers 1 mentioned above are dispersed in the matrix 3m to bond the porous plate fillers 1. The matrix 3m is a component which is present around the porous plate fillers 1 and between the particles of the fillers and bonds these particles to each other.

In the heat-insulation film 3 of the present invention, it is preferable that the porous plate fillers 1 are arranged in the form of layers (laminated). The arrangement in the form of the layers mentioned herein indicates that a large number of porous plate fillers 1 are present in the matrix 3m in a state where the porous plate fillers 1 are oriented in a direction in which a direction of the minimum length of the porous plate filler 1 is parallel to a thickness direction of the heat-insulation film 3. It is to be noted that at this time, positions of the porous plate fillers 1 (a position of the center of gravity) do not have to be orderly periodically arranged in X, Y and Z-directions of the heat-insulation film 3 (provided that the Z-direction is defined as the thickness (film thickness) direction), and there is not any problem even when the fillers are present at random. There is not any problem when the number of the layers is 1 or more, but the larger number of the layers is more preferable and the number of the layers is desirably 5 or more. When the porous plate fillers 1 are laminated in the form of the layers in the heat-insulation film 3, the heat transfer path is deflected to lengthen, and the heat insulation effect can improve. In particular, for the positions of the porous plate fillers 1, as shown in Fig. 3A, the fillers preferably are not orderly arranged in the Z-direction (the fillers preferably shift alternately), because the heat transfer path is more deflected to lengthen.

As shown in Fig. 3A, a matrix 3m portion in which the thermal conductivity is high becomes a main heat transfer path, but the heat-insulation film 3 of the present invention includes the porous plate fillers 1, and the heat transfer path makes more detours to a direction in which heat is not to be transferred (the film thickness direction). That is, a length of the heat transfer path increases, and hence the thermal conductivity can be decreased. Additionally, a bonding area between the porous plate fillers 1 via the matrix 3m is larger than that between spherical fillers 31 (see Fig. 6), and hence a strength of the whole heat-insulation film increases, and erosion, peeling or the like is hard to occur.

In the heat-insulation film 3, the porous plate fillers 1 are dispersed in the matrix 3m to bond the porous plate fillers 1, and a volume ratio between the porous plate fillers and the matrix is preferably from 50:50 to 95:5. The volume ratio is more preferably from 60:40 to 90:10 and further preferably from 70:30 to 85:15. When the volume ratio between the porous plate fillers 1 and the matrix 3m is in this range, the thermal conductivity can further be decreased. Consequently, a thickness of the heat-insulation film 3 can be decreased. In consequence, there is required less space in which the heat-insulation films 3 are disposed, and cost can be decreased. Additionally, the matrix 3m having a function of bonding the porous plate fillers 1 is easy to exert a sufficient bonding force, and the porous plate fillers 1 can be prevented from peeling. That is, the strength of the film can increase. Furthermore, thermal stress can be decreased at a time of bonding to the dissimilar material. As described above, when the space for the porous plate fillers 1 increases, the heat insulation effect can improve, and when a space for the matrix 3m increases, the strength of the film can increase. When the volume ratio between the porous plate fillers 1 and the matrix 3m is in the above range, heat insulation properties is compatible with the strength of the film.

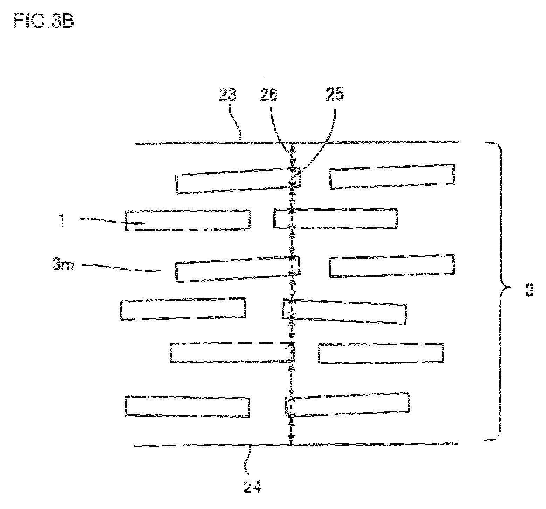

Directing of the ratio between the porous plate fillers 1 and the matrix 3m by a line will be described with reference to Fig. 3B. It is to be noted that Fig. 3A is an ideal schematic view, and Fig. 3B is a schematic view to explain measurement of a dispersed state of the porous plate fillers 1 dispersed in the matrix 3m. Fig. 3B shows a line segment 25 present on the porous plate fillers 1 and a line segment 26 present on the matrix 3m.

Additionally, in the heat-insulation film 3, when a line is drawn from a first surface 23 to a second surface 24 on an opposite side to the first surface in a thickness direction in a cross section parallel to the thickness (film thickness) direction, a ratio between a sum of lengths of the line segments 25 present on the porous plate fillers 1 and a sum of lengths of the line segments 26 present on the matrix 3m is preferably from 50:50 to 95:5. The ratio is more preferably from 60:40 to 90:10 and further preferably from 70:30 to 85:15. Specifically, 10 lines are randomly drawn in the cross section parallel to the thickness (film thickness) direction, a ratio between the line segments is obtained, and an average of the ratios is calculated. Additionally, deviations of the porous plate fillers 1 in the matrix 3m can be judged by the ratio between the sums of the lengths of the line segments. For example, as to each of the 10 randomly drawn lines, there is obtained the ratio between the sum of the lengths of the line segments 25 present on the porous plate fillers 1 and the sum of the lengths of the line segments 26 present on the matrix 3m. When the average of these ratios is obtained and there is the ratio which is as much as ±10% or more away from the average of the ratios, it can be judged that the positions where the porous plate fillers I are present noticeably deviate. In the heat-insulation film 3 of the present invention, there is not any ratio that is as much as ±10% or more away from the average of the ratios, and the porous plate fillers 1 are uniformly present in the matrix 3m. Thus, it can be considered that when the line is drawn from the first surface 23 to the second surface 24 in the thickness direction in the cross section parallel to the thickness direction and when the sum of the lengths of the line segments 25 present on the porous plate fillers 1 and the sum of the lengths of the line segments 26 present on the matrix 3m are in the above range, the porous plate fillers 1 are arranged in an amount in which the heat insulation effect can be exerted, in the thickness direction. Additionally, it can be considered that a sufficient amount of the matrix 3m is also disposed to maintain the strength of the film. That is, when the sum of the lengths of the line segments 25 present on the porous plate fillers 1 and the sum of the lengths of the line segments 26 present on the matrix 3m are in this range, the thermal conductivity can further be decreased, and the strength of the film can sufficiently be obtained.

In the heat-insulation film 3, the porous plate fillers 1 are the plates, and hence concavity and convexity are hard to be formed on the outermost surface of the heat-insulation film 3 as compared with the case of the spherical fillers. Therefore, even in a case where shock is given to a heat-insulation film portion, particle drop of the porous plate fillers 1, i.e., deficiency of the heat-insulation film 3 can be prevented.

It is preferable that the heat-insulation film 3 of the present invention includes at least one of ceramics, glass and resin as the matrix 3m. From the viewpoint of a thermal resistance, ceramics or glass is more preferable. More specifically, examples of a material forming the matrix 3m include silica, alumina, mullite, zirconia, titania, silicon nitride, acid silicon nitride, silicon carbide, acid silicon carbide, calcium silicate, calcium aluminate, calcium aluminosilicate, aluminum phosphate, aluminosilicate, potassium aluminosilicate, and glass. These materials are preferably amorphous from the viewpoint of the thermal conductivity. Alternatively, in a case where the material of the matrix 3m is ceramics, the matrix is preferably an assembly of particulates having particle diameters of 500 nm or less. When the assembly of the particulates having the particle diameters of 500 nm or less is used as the matrix, the thermal conductivity can further be decreased. Additionally, in a case where the material forming the matrix 3m is a resin, examples of the material include a silicone resin, a polyimide resin, a polyamide resin, an acrylic resin, and an epoxy resin.

In the heat-insulation film 3, it is preferable that a porosity of the whole heat-insulation film 3 is from 10 to 90%, a porosity of the porous plate filler 1 is from 20 to 90%, and a porosity of the matrix 3m is from 0 to 70%.

In the heat-insulation film 3 of the present invention, a thickness is preferably from 1 $\mu$m to 5 mm. According to such a thickness, the heat insulation effect can be obtained without adversely affecting characteristics of a substrate 8 coated with the heat-insulation film 3. It is to be noted that the thickness of the heat-insulation film 3 can suitably be selected in the above range in accordance with its use application.

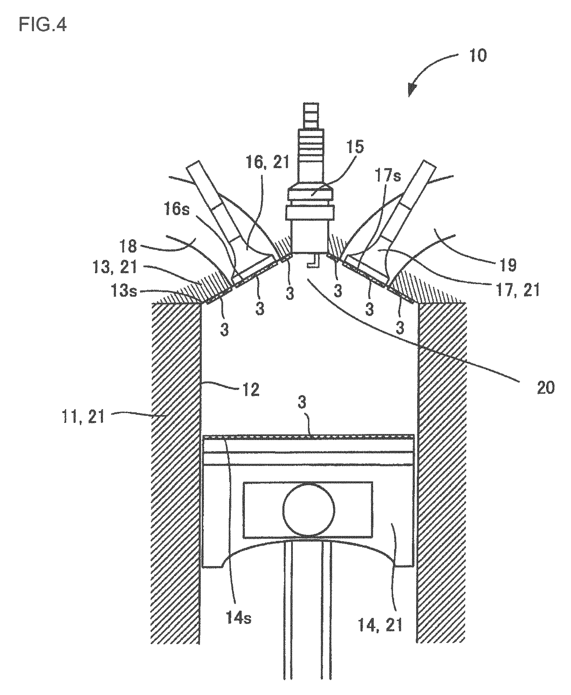

In the heat-insulation film 3 of the present invention, a heat capacity is preferably 1500 kJ/(m$^3$·K) or less, more preferably 1300 kJ/(m$^3$·K) or less, further preferably 1000 kJ/(m$^3$·K) or less, and most preferably 500 kJ/(m$^3$·K) or less. When the heat-insulation film has a low heat capacity, for example, a temperature of the heat-insulation film 3 is easy to drop after exhaust of fuel in a case where the heat-insulation film 3 is formed in an engine combustion chamber 20 (see Fig. 4). Consequently, a problem such as abnormal combustion of an engine 10 can be inhibited.

In the heat-insulation film 3 of the present invention, the thermal conductivity is preferably 1.5 W/(m·K) or less. The thermal conductivity of the heat-insulation film 3 is further preferably 1 W/(m·K) or less and most preferably 0.5 W/(m·K) or less. The heat-insulation film has a low thermal conductivity, whereby the heat transfer can be inhibited.

The heat-insulation film 3 can be formed by applying the abovementioned coating composition onto the substrate 8 and drying the coating composition. Additionally, the film can be formed by performing a heat treatment after the drying. At this time, the thick heat-insulation film 3 can be formed by repeatedly performing the applying and the drying or the heat treatment. Alternatively, the heat-insulation film 3 is formed on a virtual substrate, and then the virtual substrate is removed, thereby separately preparing the heat-insulation film 3 singly formed into a thin plate, and the heat-insulation film 3 may be adhesively bonded to or bonded to the substrate 8. As the substrate 8, a metal, ceramics, glass, plastic, wood, cloth, paper or the like is usable. Especially, examples of the substrate 8 made of the metal include iron, an iron alloy, stainless steel, aluminum, an aluminum alloy, a nickel alloy, a cobalt alloy, a tungsten alloy, and a copper alloy.

4. Heat-Insulation-Film Structure

A heat-insulation-film structure of the present invention will be described with reference to Fig. 3A and Fig. 4. As shown in Fig. 3A, the heat-insulation-film structure of the present invention is a heat-insulation-film structure in which the heat-insulation film 3 mentioned above is formed on the substrate 8. Furthermore, Fig. 4 shows an engine combustion chamber structure of one embodiment of the heat-insulation-film structure.

As shown in Fig. 4, the engine combustion chamber structure of the one embodiment of the heat-insulation-film structure of the present invention includes heat-insulation films 3 formed on surfaces of the engine constitutional members 21 (a substrate 8) constituting an engine combustion chamber 20. The heat-insulation films 3 of the present invention are included, whereby a heat insulation performance of the engine combustion chamber 20 can improve.

The heat-insulation films 3 are disposed on the surfaces (inner walls) of the engine constitutional members 21 constituting the engine combustion chamber 20. Specifically, examples of the surfaces include an upper surface 14s of a piston 14, valve heads 16s and 17s of a suction valve 16 and an exhaust valve 17, and a bottom surface 13s of a cylinder head 13.

The engine 10 has a cylinder block 11 in which a cylinder 12 is formed, and the cylinder head 13 attached to cover the upper surface of the cylinder block 11. In the cylinder 12 of the cylinder block 11, the piston 14 is slidably disposed in an upward-downward direction.

An ignition plug 15 is attached to the cylinder head 13. Additionally, the suction valve 16 and the exhaust valve 17 are attached, the suction valve 16 is constituted to open and close a suction passage 18 formed in the cylinder head 13, and the exhaust valve 17 is constituted to open and close an exhaust passage 19.

As shown in Fig. 4, the heat-insulation film 3 is disposed on the upper surface 14s of the piston 14. Furthermore, the heat-insulation films 3 are similarly disposed on the valve heads 16s and 17s of the suction valve 16 and the exhaust valve 17 and the bottom surface 13s of the cylinder head 13. These surfaces are surfaces which form the engine combustion chamber 20, and these surfaces include the heat-insulation films 3, whereby the heat insulation performance can improve.

The suction valve 16 is opened to supply the fuel to the engine combustion chamber 20 surrounded by the cylinder 12, the cylinder head 13 and the piston 14, and the fuel is ignited by the ignition plug 15 and then combusted. By this combustion, the piston 14 is pressed downward. An exhaust gas generated by the combustion is exhausted by opening the exhaust valve 17.

In the engine 10 (see Fig. 4), it is necessary to acquire heat insulation properties of the engine combustion chamber 20 at a time of combustion in a cycle of suction, combustion, expansion and exhaust, and hence in a case where the heat-insulation films 3 are disposed in the engine combustion chamber 20, it is necessary to adjust a thickness of each film to such an extent that the heat insulation effect can be obtained. However, when air newly sucked inside at a time of suction takes heat accumulated in the heat-insulation film 3 to heighten a gas temperature, a problem such as abnormal combustion might occur. To eliminate this problem, it is preferable that the heat-insulation film 3 has a small heat capacity while having the thickness with which the heat insulation effect can be obtained. Therefore, the thickness of the heat-insulation film 3 is more preferably in a range of 1 $\mu$m to 5 mm and further preferably in a range of 10 $\mu$m to 1 mm. When the thickness of the heat-insulation film 3 is adjusted in this range, the heat insulation effect can sufficiently be obtained and the occurrence of the problem of the abnormal combustion or the like can be inhibited.

Fig. 5A shows another embodiment of the heat-insulation-film structure. The embodiment of Fig. 5A is the embodiment of the heat-insulation-film structure in which a buffer bonding layer 4 (a first buffer bonding layer 4a), a heat-insulation film 3 and a surface dense layer 2 are formed on a substrate 8.

As shown in Fig. 5A, it is preferable that the heat-insulation-film structure of the present invention includes, on the surface of the heat-insulation film 3, the surface dense layer 2 including ceramics and/or glass and having a porosity of 5% or less. In a case where the heat-insulation film 3 is formed on an inner surface of a combustion chamber or a pipe of an engine of a car or the like, absorption of fuel or adhesion of cinders can be prevented when the surface dense layer 2 is formed on the outermost surface of the heat-insulation film 3.

Furthermore, when the structure has the surface dense layer 2 on the surface of the heat-insulation film 3, radiation can be reflected by the surface dense layer 2 at a time of combustion of the fuel in an engine combustion chamber 20 and heat can be radiated from the surface dense layer 2 at a time of exhaust, in a case where the engine combustion chamber 20 includes the heat-insulation films 3. Additionally, the heat-insulation film 3 can inhibit heat transfer from the surface dense layer 2 to engine constitutional members 21. Therefore, at the time of the combustion of the fuel, a temperature of an inner wall of the engine constitutional member 21 (a wall surface constituting the engine combustion chamber 20) is easy to rise following a gas temperature of the engine combustion chamber 20.

It is preferable that the heat-insulation-film structure of the present invention includes the buffer bonding layer 4 having a thickness smaller than the heat-insulation film 3, between the substrate 8 and the heat-insulation film 3 (Fig. 5A) and/or between the heat-insulation film 3 and the surface dense layer 2 (see Fig. 5B: a second buffer bonding layer 4b). When the heat-insulation film 3 is formed on the substrate 8 and the buffer bonding layer 4 is disposed, peeling due to reaction between the substrate 8 and the heat-insulation film 3 or mismatch of thermal expansion can be inhibited in a case where the heat-insulation-film structure is used at high temperatures or used under an environment which receives a heat cycle.

Hereinafter, the surface dense layer 2 and the buffer bonding layer 4 will be described in detail.

(Surface Dense Layer)

The surface dense layer 2 is a layer including ceramics denser than the heat-insulation film 3 formed on the surface of the heat-insulation-film 3 of a porous structure. In the surface dense layer 2, a porosity is 5% or less, preferably from 0.01 to 4%, and more preferably from 0.01 to 3%. According to such a dense layer, it is possible to prevent heat conduction due to convection of the gas (fuel) at the time of the combustion of the fuel. Additionally, the layer is dense, and hence the absorption of the fuel or adhesion of soot or cinders is hard to occur.

It is preferable that a material of the surface dense layer 2 is similar to the heat-insulation film 3, and it is further preferable that the material has the same composition as in the heat-insulation film and a porosity of 5% or less. The surface dense layer 2 can be made of ceramics, and examples of the material include alumina, silica, mullite, silicon nitride, acid silicon nitride, silicon carbide, acid silicon carbide, titania, zirconia, zinc oxide, and glass.

The surface dense layer 2 is made of a material which inhibits radiation heat transfer from combustion flame of a heat source at the time of the combustion of the fuel. Additionally, it is preferable that the surface dense layer 2 is easy to radiate its own heat at the time of the exhaust of the fuel. For this purpose, it is preferable to control a reflectance and a radiation rate in a wavelength region predicted from Wien's displacement law ($\lambda$mT = 2898 [$\mu$m·K] in which $\lambda$m is a wavelength indicating a maximum radiation strength and T indicates a temperature). That is, the reflectance is preferably large in a wavelength smaller than 2 $\mu$m and the radiation rate is preferably large in a wavelength larger than 2 $\mu$m.

According to the surface dense layer 2 having the porosity of 5% or less, the radiation heat transfer to an inner wall constituting the engine combustion chamber 20 can be inhibited immediately after start of the combustion and in a first half of the combustion. Additionally, in a second half of the combustion and an exhaust step, when the temperature lowers, heat is radiated from the surface dense layer 2 to the exhaust gas, thereby making it possible to prevent a suction gas to be next introduced from reaching a high temperature.

In the surface dense layer 2, the reflectance in the wavelength of 2 μm is preferably larger than 0.5. The surface dense layer has such a reflectance, and hence the heat conduction to the heat-insulation film 3 can be inhibited.

In the surface dense layer 2, the radiation rate in the wavelength of 2.5 μm is preferably larger than 0.5. Additionally, the surface dense layer has such a radiation rate, and hence the heated surface dense layer 2 can be easy to cool down.

The surface dense layer 2 is preferably thinner, but its thickness is appropriately in a range of 10 nm to 100 μm. Additionally, a heat capacity of the surface dense layer 2 is preferably 3000 kJ/(m$^3$·K) or less and more preferably 1000 kJ/(m$^3$·K) or less. The thickness is in the above range and the heat capacity is small (a thin film and a small volume), so that in the case where the engine combustion chamber 20 includes the heat-insulation film 3 and the surface dense layer 2, a temperature of the inner wall of the engine constitutional member 21 is easy to follow the gas temperature in the engine combustion chamber 20. A difference between the gas temperature and the temperature of the surface dense layer 2 decreases, and a cooling loss can be decreased.

In the surface dense layer 2, a thermal conductivity is preferably 3 W/(m·K) or less. When the thermal conductivity is in this range, the heat conduction to the heat-insulation film 3 can be inhibited.

(Buffer Bonding Layer)

The buffer bonding layer 4 is present between the substrate 8 (the engine constitutional member 21) and the heat-insulation film 3 and/or between the heat-insulation film 3 and the surface dense layer 2, and a thickness of the buffer bonding layer is smaller than that of the heat-insulation film 3. According to the buffer bonding layer 4, it is possible to eliminate mismatch of thermal expansion or Young's modulus between both layers which come in contact with this buffer bonding layer, and it is possible to inhibit peeling due to the thermal stress.

The buffer bonding layer 4 is preferably made of a material having an adhesively bonding function or a material which can be formed as a thin film. An example of the buffer bonding layer 4 is a layer made of an inorganic binder, an inorganic polymer, oxide sol, water glass, a brazing material, or a plating film. Alternatively, the buffer bonding layer 4 may be a layer made of these materials combined with a substance similar to the heat-insulation film 3. Additionally, the buffer bonding layer can be obtained by bonding the heat-insulation film 3 singly formed into the thin plate to the substrate 8 (the engine constitutional member 21) by the above material.

It is preferable that a thermal expansion coefficient of the buffer bonding layer 4 is larger than that of one of two adjacent layers and smaller than that of the other layer. Additionally, it is preferable that the Young's modulus of the buffer bonding layer 4 is smaller than those of the other two adjacent layers. According to such a constitution, a mismatch between the layers can be eliminated, and the peeling due to the thermal stress can be inhibited.

In the buffer bonding layer 4, a thermal resistance is preferably large, and specifically, the thermal resistance is preferably 10$^{-6}$ m$^2$K/W or more. Furthermore, the thermal resistance is preferably from 10$^{-6}$ to 10 m$^2$K/W, more preferably from 10$^{-5}$ to 10 m$^2$K/W, and further preferably from 10$^{-4}$ to 10 m$^2$K/W. By forming the buffer bonding layer 4, the heat insulation effect can further sufficiently be obtained. Additionally, by forming the buffer bonding layer 4, the mismatch of thermal expansion of bodies to be bonded can be buffered, and a thermal shock resistance and a thermal stress resistance can improve.

Furthermore, the buffer bonding layer 4 preferably has a material composition to inhibit mutual reaction of the respective layers which come in contact with the buffer bonding layer, and consequently, an oxidation resistance and a reaction resistance improve and a durability of the heat-insulation film 3 improves.

The heat-insulation film of the present invention can be disposed in the engine combustion chamber 20, and additionally, the heat-insulation film is utilizable in a pipe, a cooling device, a building material or the like.

(Manufacturing Method)

Next, a manufacturing method of the heat-insulation-film structure will be described in an example of an engine combustion chamber structure.

In a case where the structure is constituted to have the first buffer bonding layer 4a between the inner wall constituting the engine combustion chamber 20 (the engine constitutional member 21) and the heat-insulation film 3, materials which form the first buffer bonding layer 4a are applied (e.g., the inorganic binder or the inorganic polymer, the oxide sol, the water glass and the brazing material) or formed into the plating film on the engine constitutional member 21, and the heat-insulation film 3 is formed thereon.

The heat-insulation film 3 can be formed by applying, onto the predetermined substrate 8, the coating composition in which the porous plate filler 1 is dispersed in the inorganic binder or the inorganic polymer, the oxide sol, the water glass or the like, followed by drying, and further performing the heat treatment. A preparing composition of the coating composition is determined in consideration of volumes of the matrix 3m and the porous plate filler 1 which are present after dried and heated. Specifically, a weight ratio is obtained from a ratio volume to be prepared, via a density, and weights of the porous plate filler 1 and the matrix 3m are measured, whereby a desirable volume ratio can be obtained.

Alternatively, porous thin plates may separately be prepared and attached to the engine constitutional member 21 by use of the material which forms the first buffer bonding layer 4a as a bonding material.

In a case where the structure is constituted to have the second buffer bonding layer 4b between the heat-insulation film 3 and the surface dense layer 2, the second buffer bonding layer 4b is formed on the heat-insulation film 3 in the same manner as in the first buffer bonding layer 4a, and the surface dense layer 2 is formed thereon.

The surface dense layer 2 can be formed by forming the heat-insulation film 3 (or forming the second buffer bonding layer 4b) and additionally performing a sputtering method, a PVD method, an EB-PVD method, a CVD method, an AD method, flame spraying, a plasma spray method, a cold spray method, plating, a heat treatment after wet type coating, or the like. Alternatively, a dense thin plate may separately be prepared as the surface dense layer 2 and bonded to a substrate material (the first buffer bonding layer 4a or the engine constitutional member 21) by use of a bonding material made of a material which forms the heat-insulation film 3. Alternatively, a dense thin plate may separately be prepared as the surface dense layer 2 and bonded to the heat-insulation film 3 by the second buffer bonding layer 4b.

(Examples)

Hereinafter, the present invention will be described in more detail on the basis of examples, but the present invention is not limited to these examples.

(Examples 1 to 7 and Comparative Examples 1 and 2)

First, a pore former (latex particles or melamine resin particles), polyvinyl butyral resin (PVB) as a binder, DOP as a plasticizer and xylene and 1-butanol as solvents were added to yttria partially stabilized zirconia powder, and mixed in a ball mill for 30 hours, to prepare a green sheet forming slurry. This slurry was subjected to a vacuum defoaming treatment to adjust a viscosity into 4000 cps, and then a green sheet having a thickness of 10 $\mu$m after fired was formed by a doctor blade device and cut into a dimension of an outer shape of 50 mm $\times$ 50 mm. This formed body was fired at 1100°C for one hour, and ground after fired, to obtain a porous thin plate filler (a porous plate filler 1).

The porous plate filler 1 included pores having pore diameters of 50 nm and had a thickness (a minimum length) of 10 $\mu$m. Additionally, when an aspect ratio of each of 20 optional porous plate fillers was measured, its value was 4. Additionally, in the porous plate filler 1, a thermal conductivity was 0.30 W/(m·K), a heat capacity was 1000 kJ/(m$^3$·K), a porosity was 60%, and a particle diameter was 0.13 $\mu$m.

Additionally, the same material as in the porous plate filler 1, which was separately formed into about 0.5 mm $\times$ 5 mm $\times$ 30 mm, was fired, its thermal diffusivity was measured by a light AC method, specific heat of the same material was measured by a DSC method, and a product of the thermal diffusivity, the specific heat and a density (an apparent particle density) was obtained as the thermal conductivity. Additionally, the porosity was obtained by the following equation.

$$\text{Porosity (\%)} = (1-(\text{the apparent particle density/a true density})) \times 100$$

In the above equation, the apparent particle density was measured by a liquid immersion method in which mercury was used. Additionally, the true density was measured by pycnometry after sufficiently grinding the porous plate filler 1.

The heat capacity of the porous plate filler 1 was calculated as follows. The specific heat was measured by the DSC method, and a product of the specific heat and the density (the apparent particle density) was obtained as the heat capacity of the porous plate filler 1. The apparent particle density was measured by the liquid immersion method in which mercury was used.

Additionally, for the particle diameter, a fine structure (FE-SEM) of the porous plate filler 1 was observed, a size of one particle was measured by image processing, and an average value of 10 particles was obtained.

Next, polysiloxane which became a matrix 3m, the porous plate filler 1 and a coating composition including water were prepared, applied onto a SUS substrate (a diameter of 10 mm and a thickness of 1 mm) which was a substrate 8 and dried, followed by a heat treatment at 200°C to form a heat-insulation film 3. At this time, in the heat-insulation film 3, five or more porous plate fillers 1 were laminated in a thickness direction, and its thickness was about 100 $\mu$m in all the films.

(Directing of Volume Ratio by Area)

A cross section of the heat-insulation film 3 which was parallel to the thickness direction was observed with an SEM. From areas of the porous plate fillers 1 and the matrix 3m in the cross section, a volume ratio between the porous plate fillers 1 and the matrix 3m was calculated.

(Ratio Directing by Line)

The cross section of the heat-insulation film which was parallel to the thickness direction was observed with the SEM. In the cross section in the thickness direction, a line was drawn from a first surface to a second surface on an opposite side to the first surface in the thickness direction. A sum of lengths of line segments of the line present on the porous plate filler and a sum of lengths of line segments of the line present on a matrix were obtained, and a filler ratio and a matrix ratio were calculated.

Specifically, 10 lines were randomly drawn in the cross section parallel to the thickness (film thickness) direction, and in each line, there was obtained a ratio between a sum of lengths of line segments 25 present on the porous plate filler 1 and a sum of lengths of line segments 26 present on the matrix 3m. Further, an average of these ratios was obtained (directing by the line (an average value)). Additionally, by judging whether or not there was a ratio which was as much as $\pm 10\%$ or more away from the average of the ratios, it was judged whether or not positions where the porous plate fillers 1 were present noticeably deviated (directing by the line (deviation evaluation)). For example, in a case where the filler ratio was 80% in the average of the ratios, when the ratios of all the 10 lines were from 70 to 90%, the evaluation was G (good), but on the other hand, when there was even one ratio which was out of 10%, e.g., 65%, the evaluation was N (no good).

(Thermal Conductivity)

A thermal conductivity in the cross section of the heat-insulation film 3 which was parallel to the thickness direction was measured in a laser flash two-layer model.

(Heat Capacity)

A heat capacity of the heat-insulation film 3 was calculated from a product of specific heat $\times$ a density (an apparent particle density) obtained by grinding the heat-insulation film 3 and then measuring the specific heat by a DSC method.

(Peeling Properties)

A cold cycle at 200°C to room temperature was carried out as much as 10 times, and it was observed whether or not the heat-insulation film 3 peeled from the SUS substrate. As to the results of peeling properties, no peeling (excellent) is indicated by E, no peeling (good) is indicated by G, and peeling (no good) is indicated byN.

Table 2 shows results of the directing of the volume ratio by the area, the ratio directing by the line, the thermal conductivity, the heat capacity and the peeling properties concerned with the heat-insulation film of each of Examples 1 to 7 and Comparative Examples 1 and 2.

(Examples 8 to 17)

Porous plate fillers 1 were obtained in steps similar to those of Examples 1 to 7 and Comparative Examples 1 and 2. Afterward, an aspect ratio, a porosity, a particle diameter, a thermal conductivity and a heat capacity of each porous plate filler were obtained by methods similar to those of Examples 1 to 7 and Comparative Examples 1 and 2, and Table 1 shows the results.

Next, polysiloxane, the porous plate filler 1 and a coating composition including water were prepared so that volume ratios of the porous plate filler 1 and a matrix 3m were 80% of the porous plate filler 1 and 20% of the matrix 3m, and they were applied onto a SUS substrate (a diameter of 10 mm and a thickness of 1 mm) which was a substrate 8, and dried, followed by a heat treatment at 200°C to obtain a heat-insulation film 3. Afterward, by methods similar to those of each of Examples 1 to 7 and Comparative Examples 1 and 2, directing by the line on the heat-insulation film 3 (deviation evaluation) was carried out, and a thermal conductivity, a heat capacity and peeling properties were obtained. Table 2 shows the results.

[Table 1]

| | Filler | | | | | |
|---|---|---|---|---|---|---|
| | Aspect ratio | Minimum length ($\mu$m) | Porosity | Particle dia. ($\mu$m) | Thermal conductivity (W/(m·K)) | Heat capacity (kJ/(m$^3$·K)) |
| Comparative Example 1 | 4 | 10 | 60% | 0.13 | 0.30 | 1000 |
| Example 1 | 4 | 10 | 60% | 0.13 | 0.30 | 1000 |
| Example 2 | 4 | 10 | 60% | 0.13 | 0.30 | 1000 |
| Example 3 | 4 | 10 | 60% | 0.13 | 0.30 | 1000 |
| Example 4 | 4 | 10 | 60% | 0.13 | 0.30 | 1000 |
| Example 5 | 4 | 10 | 60% | 0.13 | 0.30 | 1000 |
| Example 6 | 4 | 10 | 60% | 0.13 | 0.30 | 1000 |
| Comparative Example 2 | 4 | 10 | 60% | 0.13 | 0.30 | 1000 |
| Example 7 | 4 | 10 | 60% | 0.13 | 0.30 | 1000 |
| Example 8 | 8 | 10 | 60% | 0.13 | 0.30 | 1000 |
| Example 9 | 20 | 2 | 60% | 0.13 | 0.30 | 1000 |
| Example 10 | 4 | 3 | 60% | 0.13 | 0.30 | 1000 |
| Example 11 | 4 | 7 | 60% | 0.13 | 0.30 | 1000 |
| Example 12 | 4 | 15 | 60% | 0.13 | 0.30 | 1000 |
| Example 13 | 4 | 10 | 52% | 0.13 | 0.50 | 1250 |
| Example 14 | 4 | 10 | 70% | 0.13 | 0.15 | 750 |
| Example 15 | 4 | 10 | 78% | 0.13 | 0.10 | 560 |
| Example 16 | 4 | 10 | 60% | 0.07 | 0.28 | 1000 |
| Example 17 | 4 | 10 | 60% | 0.90 | 0.50 | 1000 |

[Table 2]

| | Directing by volume | | Directing by line (average value) | | Directing by line (deviation evaluation) | Heat-insulation film | | |
|---|---|---|---|---|---|---|---|---|
| | Filler ratio | Matrix ratio | Filler ratio | Matrix ratio | Within 10% | Thermal conductivity (W/(m·K)) | Heat capacity (kJ/(m$^3$·K)) | Peeling properties |
| Comparative Example 1 | 98% | 2% | 98% | 2% | G | 0.32 | 1012 | N |
| Example 1 | 95% | 5% | 94% | 6% | G | 0.36 | 1030 | G |
| Example 2 | 90% | 10% | 88% | 12% | G | 0.37 | 1060 | E |
| Example 3 | 85% | 15% | 82% | 18% | G | 0.38 | 1090 | E |
| Example 4 | 80% | 20% | 81% | 19% | G | 0.4 | 1120 | E |
| Example 5 | 70% | 30% | 72% | 28% | G | 0.8 | 1180 | E |
| Example 6 | 50% | 50% | 53% | 47% | G | 1.5 | 1300 | E |

(continued)

| | Directing by volume | | Directing by line (average value) | | Directing by line (deviation evaluation) | Heat-insulation film | | |
|---|---|---|---|---|---|---|---|---|
| | Filler ratio | Matrix ratio | Filler ratio | Matrix ratio | Within 10% | Thermal conductivity (W/(m·K)) | Heat capacity (kJ/(m³·K)) | Peeling properties |
| Comparative Example 2 | 40% | 60% | 42% | 58% | G | 2.7 | 1360 | E |
| Example 7 | 85% | 15% | 82% | 18% | N | 0.43 | 1090 | G |
| Example 8 | 80% | 20% | 80% | 20% | G | 0.32 | 1120 | E |
| Example 9 | 80% | 20% | 80% | 20% | G | 0.31 | 1120 | E |
| Example 10 | 80% | 20% | 80% | 20% | G | 0.33 | 1120 | E |
| Example 11 | 80% | 20% | 80% | 20% | G | 0.34 | 1120 | E |
| Example 12 | 80% | 20% | 84% | 16% | G | 0.43 | 1120 | E |
| Example 13 | 80% | 20% | 81% | 19% | G | 0.70 | 1320 | E |
| Example 14 | 80% | 20% | 81% | 19% | G | 0.30 | 920 | E |
| Example 15 | 80% | 20% | 81% | 19% | G | 0.25 | 768 | E |
| Example 16 | 80% | 20% | 81% | 19% | G | 0.38 | 1120 | E |
| Example 17 | 80% | 20% | 81% | 19% | G | 0.70 | 1120 | E |

In the heat-insulation film 3 of each of Examples 1 to 17, the volume ratio between the porous plate fillers and the matrix was from 50:50 to 95:5, the thermal conductivity was 1.5 W/(m·K) or less, and the heat capacity was 1500 kJ/(m³·K) or less. It is to be noted that when the thermal conductivity or the heat capacity is in this range, it can be considered that the heat-insulation film is excellent in heat insulation effect and flame retardance. Additionally, the heat-insulation films 3 of the Examples 1 to 17 were also excellent in peeling properties because peeling did not occur. In the heat-insulation film 3 of Example 7, as compared with Example 3, a ratio obtained from a volume was equal, but it was judged in the ratio directing by the line that positions where the porous plate fillers 1 were present noticeably deviated. Consequently, in Example 7, the thermal conductivity was higher than in Example 3.

In Example 8, the aspect ratio of the porous plate filler 1 was large as compared with Example 4. Consequently, in the heat-insulation film 3 of Example 8, a heat transfer path lengthened and the thermal conductivity was low, as compared with Example 4. In Example 9, a minimum length of the porous plate filler 1 was short and the aspect ratio was large, as compared with Example 4. Consequently, in the heat-insulation film 3 of Example 9, the number of layers of the porous plate filler 1 increased and the thermal conductivity of the film was low, as compared with Example 4.

In Example 10, the minimum length of the porous plate filler 1 was short as compared with Example 4. In Example 11, the minimum length of the porous plate filler 1 was longer than in Example 10 but shorter than in Example 4. Consequently, in Example 10 and Example 11, the thermal conductivity of the heat-insulation film 3 was low as compared with Example 4, and in Example 10, the thermal conductivity of the heat-insulation film 3 was further lower than in Example 11. In Example 12, the minimum length of the porous plate filler 1 was long as compared with Example 4. Consequently, the number of the layers of the porous plate filler 1 of Example 12 decreased and the thermal conductivity of the heat-insulation film 3 was high.

In Example 13, the porosity of the porous plate filler 1 was low as compared with Example 4. Consequently, the thermal conductivity and heat capacity of the heat-insulation film 3 were high. In Example 14, the porosity of the porous plate filler 1 was high and the thermal conductivity was low, as compared with Example 4. Consequently, the thermal conductivity and heat capacity of the heat-insulation film 3 were low. In Example 15, the porosity of the porous plate filler 1 is further higher than in Example 14. Consequently, the thermal conductivity and heat capacity of the heat-insulation film 3 were further low. In Example 16, particle diameters of particles included in the porous plate filler 1 were small and the thermal conductivity was low, as compared with Example 4. Consequently, the thermal conductivity of the heat-insulation film 3 was low. In Example 17, the particle diameters of the particles included in the porous plate filler 1 were large and the thermal conductivity was high, as compared with Example 4. Consequently, the thermal conductivity of the heat-insulation film 3 was high.

Industrial Applicability

A heat-insulation film of the present invention and a heat-insulation-film structure are applicable to an engine of a car or the like, a pipe, a building material, a cooking device or the like.

Description of Reference Numerals

1: porous plate filler, 2: surface dense layer, 3: heat-insulation film, 3m: matrix, 4: buffer bonding layer, 4a: first buffer bonding layer, 4b: second buffer bonding layer, 7: coating layer, 8: substrate, 10: engine, 11: cylinder block, 12: cylinder, 13: cylinder head, 13s: bottom surface (of the cylinder head), 14: piston, 14s: upper surface (of the piston), 15: ignition plug, 16: suction valve, 16s: valve head, 17: exhaust valve, 17s: valve head, 18: suction passage, 19: exhaust passage, 20: engine combustion chamber, 21: engine constitutional member, 23: first surface, 24: second surface, 25: line segment present on the porous plate filler, 26: line segment present on the matrix, and 31: spherical filler.

**Claims**

1.  A heat-insulation film in which porous plate fillers comprising plates having an aspect ratio of 3 or more, a minimum length of 0.1 to 50 $\mu$m and a porosity of 20 to 90% are dispersed in a matrix to bond the porous plate fillers, and a volume ratio between the porous plate fillers and the matrix is from 50:50 to 95:5.

2.  The heat-insulation film according to claim 1,
    wherein when a line is drawn from a first surface to a second surface on an opposite side to the first surface in a thickness direction in a cross section parallel to the thickness direction, a ratio between a sum of lengths of line segments present on the porous plate fillers and a sum of lengths of line segments present on the matrix is from 50:50 to 95:5.

3.  The heat-insulation film according to claim 1 or 2,
    wherein a thermal conductivity of the porous plate filler is 1 W/(m·K) or less.

4.  The heat-insulation film according to any one of claims 1 to 3,
    wherein a heat capacity of the porous plate filler is from 10 to 3000 kJ/(m$^3$·K).

5.  The heat-insulation film according to any one of claims 1 to 4,
    wherein the porous plate filler comprises pores of a nanoorder.

6.  The heat-insulation film according to any one of claims 1 to 5,
    wherein the porous plate filler includes a metal oxide.

7.  The heat-insulation film according to any one of claims 1 to 6,
    wherein the porous plate filler comprises particles having particle diameters of 1 nm to 10 $\mu$m.

8.  The heat-insulation film according to any one of claims 1 to 7,
    wherein a heat capacity is 1500 kJ/(m$^3$·K) or less.

9.  The heat-insulation film according to any one of claims 1 to 8,
    wherein a thermal conductivity is 1.5 W/(m·K) or less.

10. A heat-insulation-film structure in which the heat-insulation film according to any one of claims 1 to 9 is formed on a substrate.

11. The heat-insulation-film structure according to claim 10,
    which has, on the surface of the heat-insulation film, a surface dense layer including ceramics and/or glass and having a porosity of 5% or less.

12. The heat-insulation-film structure according to claim 11,
    which comprises a buffer bonding layer having a thickness smaller than the heat-insulation film, between the substrate and the heat-insulation film and/or between the heat-insulation film and the surface dense layer.

FIG.1

MAXIMUM LENGTH

MINIMUM LENGTH

1

FIG.2

1

7

FIG.3A

1

3m

Z-DIRECTION

3

X-DIRECTION

8,21

FIG.3B

FIG.4

FIG.5A

FIG.5B

FIG.6

**INTERNATIONAL SEARCH REPORT**

| International application No. |
|---|
| PCT/JP2014/079262 |

| A. CLASSIFICATION OF SUBJECT MATTER |
|---|
| *F16L59/00*(2006.01)i, *B32B5/18*(2006.01)i, *C04B38/00*(2006.01)i, *F02F1/00* (2006.01)i, *F02F1/24*(2006.01)i, *F02F1/42*(2006.01)i |

According to International Patent Classification (IPC) or to both national classification and IPC

| B. FIELDS SEARCHED |
|---|
| Minimum documentation searched (classification system followed by classification symbols) |
| F16L59/00-59/22, B32B5/00-5/36, C04B38/00, F02F1/00, F02F1/24, F02F1/42 |

Documentation searched other than minimum documentation to the extent that such documents are included in the fields searched

Jitsuyo Shinan Koho     1922-1996   Jitsuyo Shinan Toroku Koho  1996-2015
Kokai Jitsuyo Shinan Koho  1971-2015   Toroku Jitsuyo Shinan Koho  1994-2015

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2008-200922 A (GRANDEX Co., Ltd.), 04 September 2008 (04.09.2008), entire text; all drawings & WO 2008/062605 A1 | 1-12 |
| Y | DE 19625492 C1 (EUROCOPTER DEUTSCHIAND GMBH), 22 January 1998 (22.01.1998), entire text; all drawings (Family: none) | 1-12 |
| Y | JP 60-159496 A (Hutchinson S.A.), 20 August 1985 (20.08.1985), entire text; all drawings & US 4660861 A     & EP 148652 A1 & FR 2557671 A     & NO 845255 A & AU 3688184 A | 1-12 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 January 2015 (16.01.15) | 03 February 2015 (03.02.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

| International application No. |
| --- |
| PCT/JP2014/079262 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 62-57869 B2  (Susumu KIYOKAWA),<br>03 December 1987 (03.12.1987),<br>entire text; all drawings<br>(Family: none) | 1-12 |
| A | JP 63-215497 A  (Bronzavia-Air Equipement),<br>07 September 1988 (07.09.1988),<br>entire text; all drawings<br>& US 4919995 A          & EP 280607 A1<br>& FR 2611024 A1          & CA 1282311 C | 1-12 |
| A | JP 11-270778 A  (Isuzu Motors Ltd.),<br>05 October 1999 (05.10.1999),<br>entire text; all drawings<br>(Family: none) | 1-12 |
| A | JP 8-156173 A  (Kawai Musical Instruments Mfg.<br>Co., Ltd.),<br>18 June 1996 (18.06.1996),<br>entire text; all drawings<br>(Family: none) | 1-12 |
| A | JP 2011-220419 A  (Toyota Motor Corp.),<br>04 November 2011 (04.11.2011),<br>entire text; all drawings<br>(Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008200922 A
- JP 2011052630 A